Europäisches Patentamt

European Patent Office

Office européen des brevets

(11) Veröffentlichungsnummer: **0 399 260**
A1

## (12) EUROPÄISCHE PATENTANMELDUNG

(21) Anmeldenummer: **90108410.3**

(22) Anmeldetag: **04.05.90**

(51) Int. Cl.5: **B66F 19/00, B66F 7/00, B23Q 1/18**

(30) Priorität: **12.05.89 DE 3915430**

(43) Veröffentlichungstag der Anmeldung:
**28.11.90 Patentblatt 90/48**

(84) Benannte Vertragsstaaten:
**AT CH DE IT LI**

(71) Anmelder: **Gesellschaft für Forschung und Entwicklung wirtschaftlicher Produktionssysteme mbH -GFE-Lindemannsheide 60 D-4902 Bad Salzuflen 3(DE)**

(72) Erfinder: **Weniger, Heinz Splittenbrede 34a D-4800 Bielefeld 1(DE)**

(54) **Vorrichtung zum Heben und Senken beliebiger Gegenstände und Lasten.**

(57) Vorrichtung zum Heben und Senken beliebiger Gegenstände und Lasten mit zwischen einem unteren (6) und einem oberen (7) Rahmen befindlichen Steigschienen (5), auf denen Rollwagen (1), die mit einer durchgehenden, über einen Antrieb (4) führende Kette (2) verbunden sind, hin und her gezogen werden. Dabei hebt und senkt sich der obere Rahmen (7), der für die Aufnahme von Förderern für horizontalen, vertikalen o. dgl. Transport vorgesehen ist.

EP 0 399 260 A1

## Vorrichtung zum Heben und Senken beliebiger Gegenstände und Lasten.

Die Erfindung betrifft eine Vorrichtung für das Heben und Senken beliebiger Gegenstände und Lasten.

Die bekannten Vorrichtungen haben den Nachteil, daß mit Spindeltriebwerken oder Scherenkonstruktionen mit Hydraulikantrieben o. dgl. komplizierten Antrieben, die wartungsintensiv sind und einen hohen Leistungsbedarf erfordern, ausgerüstet sind,und wegen dieser Ausrüstung hohe Baumaße haben, sodaß Begehplattformen erstellt werden müssen oder aber Löcher in den Betonböden erforderlich werden, um die auf dem Hubwerk befindlichen Gegenstände von Hand erreichen zu können.

Der Erfindung liegt die Aufgabe zugrunde, diese Mängel zu beseitigen, indem mit einfachen, überall erhältlichen Normteilen wie Ketten, Kettenräder, Zahnstangen, Zahnräder und Lager bei bestmöglicher Nutzung der zur Verfügung stehenden Steiglängen, die zu verrichtenden Hubarbeiten mit geringstmöglichem Energieeinsatz ausführen zu können, und daß bei kleinstmöglicher Bauhöhe ein größtmöglicher Hubweg erzielt wird, um damit die auf dem Hubwerk befindlichen Gegenstände ohne zusätzliche Maßnahmen wie Begehplattformen oder Betoblöcher, besser mit der Hand zu erreichen.

Nachstehend wird unter Bezugnahme auf die Zeichnungen ein Ausführungsbeispiel der Erfindung näher erläutert.

Im Ausführungsbeispiel ist die Vorrichtung so aufgebaut, daß sich die Steigschienen 5 auf dem unteren Rahmen 6 befinden. Das Ausführungsbeispiel des Rollwagen 1 hingegen ist für eine Ausführung der Vorrichtung, bei der sich die Steigschienen 5 am oberen Rahmen 7 befinden. Es gibt Einsatzfälle, da ist es besser, wenn die Steigschienen 5 auf dem oberen Rahmen 7 aufgebaut werden. In diesem Falle ist der Antrieb 4 nicht mit höhenbeweglich. Zu jeder Steigschiene 5 gehört ein Rollwagen 1. Alle Rollwagen 1 sind mit nur einem Stück Kette, Seil o. dgl. 2 verbunden, das über Umlenkräder 24 abgewinkelt und auch über das Antriebsrad 4.1 des Antriebes 4 geführt wird. Somit können die Rollwagen 1 hin und her gezogen werden. Dabei hebt und senkt sich der obere Rahmen 7 mit den darauf befindlichen Förderern, mit den wiederum andere Gegenstände horizontal ortsveränderlich sind.

Am unteren Rahmen 6 befinden sich im Ausführungsbeispiel die Zahnstangen 11, in die die auf Wellen 8 befindlichen Zahnräder 9 eingreifen, und dadurch, daß die Wellen 8 im Lagersitz 10 der Eckführungen 25 lagern, ist eine Parallelhaltung des unteren Rahmen 6 zum oberen Rahmen 7 gewährleistet.

Am oberen Rahmen 7 befinden sich im Ausführungsbeispiel die Eckführungen 25, die neben dem Lagersitz 10 die Verdrehsicherungsrollen 12, die Umlenkräder 24 und die Befestigungslöcher 26.1 für den oberen Rahmen 7 oder den unteren Rahmen 6, je nach Aufbauart, besitzen.

Die Verdrehsicherungsrollen 12 laufen an den Seiten 13 der Zahnstangen 11. Damit wird die Verdrehung des oberen Rahmen 7 zum unteren Rahmen 6 verhindert. über die Umlenkräder 24 wird die Kette oder das Seil o. dgl. 2 vom Antrieb 4 zu den Rollwagen 1 geführt. Dort ist, im Ausführungsbeispiel die Kette 2, an einstellbaren Aufhängungen 3 durch das Zusammenschrauben der beiden Hälften 15 über die verstellbaren Gewindebolzen 17 mit der Platte 19, mit den Rollwagen 1 kraftschlüssig verbunden.

Mindesten eine Rolleinrichtung 21 ist mittig mit einer Spurrolle 23 bei einem Rollwagen 1 ausgerüstet. Die Spurrolle 23 läuft im Freiraum 5.1 der Steigschienen 5, während die Rollen 21.1 auf den Laufflächen 5.2 der Steigschienen 5 abrollen.

Eine der Eckführungen 26 besitzt einen Halter 27 für die Befestigung des Antriebes 4, der an jeder beliebigen Ecke der Vorrichtung angebracht werden kann.

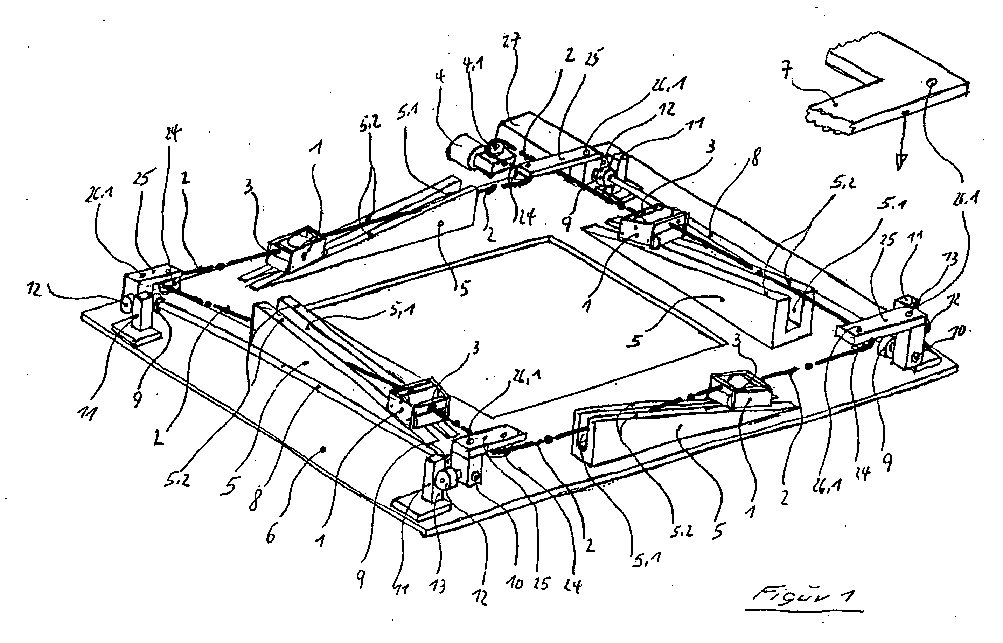

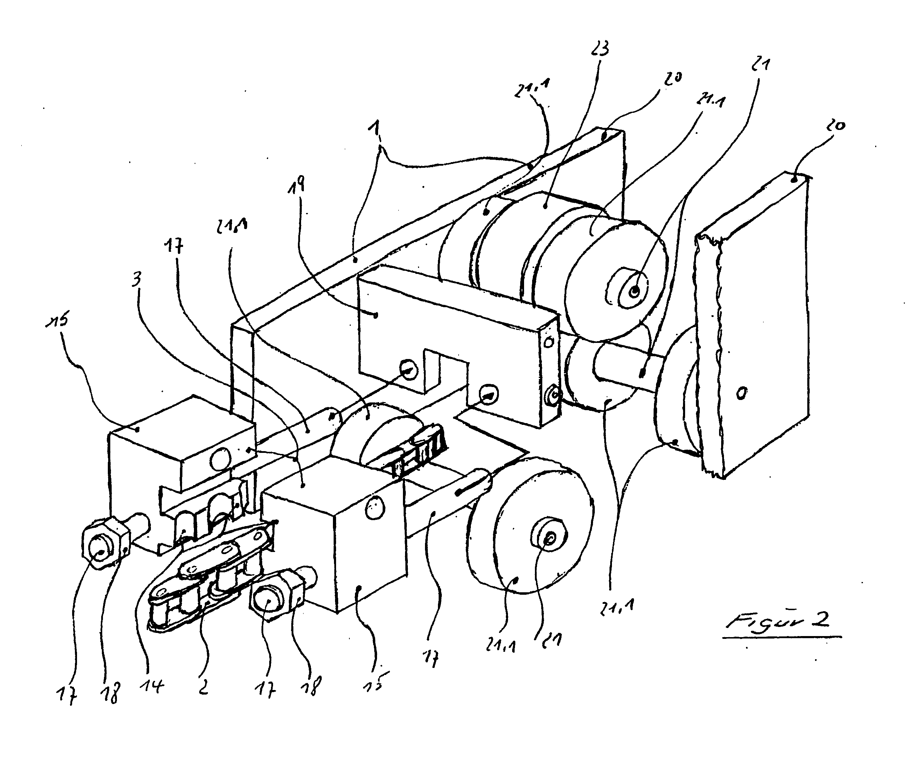

## Ansprüche

1. Vorrichtung zum Heben und Senken beliebiger Gegenstände und Lasten, dadurch gekennzeichnet, daß beliebig viele Rollwagen (1), die mit Ketten, Seilen o. dgl. (2), befestigt an einstellbaren Aufhängungen (3), von einem Antrieb (4) auf Steigschienen (5), die sich auf einem Rahmen (6) befinden, rauf und runter gezogen und dabei einen anderen Rahmen (7), ausrüstbar mit beliebigen Förderern oder Gegenständen,diese gleichzeitig heben und senken, und daß Wellen (8) mit mindestens jeweils zwei Zahnrädern (9) versehen sind, die in am Rahmen (7) befindlichen Lagersitz (10) lagern, und daß die Zahnräder (9) in am Rahmen (6) befestigte Zahnstangen (11) eingreifen und Verdrehsicherungsrollen (12) an den Seiten (13) der Zahnstangen (11) anlaufend vorgesehen sind.

2. Vorrichtung nach Anspruch 1, dadurch gekennzeichnet, daß die Aufhängung (3), vorzugsweise ausgeführt für Kettenaufhängung, so ausgeführt ist, daß durch entsprechende Profilierung (14) und Zusammenschrauben der zwei Hälften (15) mit der insgesamt durchgehenden Kette (2) ein Kraftschluß entsteht, und daß mittels Gewindebolzen (17) und Muttern (18) in Verbindung mit Platte (19), die mit den Rollwagenseiten (20) verbunden ist, eine gleichzeitige Zugverbindung zum Antrieb (4) mit individueller Justierbarkeit der einzelnen Rollwagen (1) auf den Steigschienen (5) gewährleistet ist.

3. Vorrichtung nach Anspruch 1 und 2, dadurch gekennzeichnet, daß die Steigschienen (5) für das Eintauchen der Ketten, Seile o. dgl. (2) mittig mit einem Freiraum (5.1) versehen sind.

4. Vorrichtung nach Anspruch 1 bis 3, dadurch gekennzeichnet, daß die Rollwagen (1) vorzugsweise mit einseitig zwei und anderseitig einer Rolleinrichtung (21) ausgerüstet sind, wobei die Rolleinrichtungen (21) an einer der beiden Seiten mit Spurrollen (23) versehen sind, die spursichernd in den Freiraum (5.1) der Steigschienen (5) eingreifen.

5. Vorrichtung nach Anspruch 1 bis 4, dadurch gekennzeichnet, daß die Steigschienen (5), Zahnstangen (11) und die mit Lagersitz (10), Verdrehsicherungsrollen (12) und Umlenkrad (24) versehenen Eckführungen (25) so ausgeführt sind, daß sie bei gleicher Hubwirkung jeweils am unteren Rahmen (6) bzw. oberen Rahmen (7) aufbaubar sind.

6. Vorrichtung nach Anspruch 1 bis 5, dadurch gekennzeichnet, daß die Eckführung (26) zusätzlich mit einem Halter (27) für den Antrieb (4) ausgerüstet ist.

Figur 1

EP 0 399 260 A1

Figur 2

EP 0 399 260 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A- 515 092 (ATELIERS DES CHARMILLES S.A.) * Spalte 5, Zeile 53 - Spalte 6, Zeile 11; Figuren 5,6 * --- | 1 | B 66 F 19/00 B 66 F 7/00 B 23 Q 1/18 |
| A | FR-A- 560 191 (GAY) * Figuren * --- | 1 | |
| A | PATENT ABSTRACTS OF JAPAN, Band 7, Nr. 237 (M-250)[1382], 21. Oktober 1983; & JP-A-58 126 030 (HITACHI SEISAKUSHO K.K.) 27-07-1983 --- | 1 | |
| A | US-A-2 160 770 (WELLER) * Seite 1, Zeilen 20-35; Figuren 1,5 * --- | 1 | |
| A | GB-A-2 011 350 (PFISTER GmbH) * Figur 8; Seite 5, Zeilen 75-129 * --- | 1 | |
| A | FR-A-2 266 633 (MARWAIS INTERNATIONAL S.A.) * Seite 10, Zeilen 29-32; Figur 7 * --- | 2 | RECHERCHIERTE SACHGEBIETE (Int. Cl.5) |
| A | DE-A-1 777 212 (FIRMA R. BLOHM) ----- | | B 66 F B 23 Q F 16 M |

Der vorliegende Recherchenbericht wurde für alle Patentansprüche erstellt

| Recherchenort | Abschlußdatum der Recherche | Prüfer |
|---|---|---|
| DEN HAAG | 03-09-1990 | GUTHMULLER J.A.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)